Europäisches Patentamt

European Patent Office

Office européen des brevets

(19)

(11) Numéro de publication : **0 112 265**
**B1**

# (12) FASCICULE DE BREVET EUROPÉEN

(45) Date de publication du fascicule du brevet :
04.03.87

(51) Int. Cl.⁴ : **B 60 L   5/28**

(21) Numéro de dépôt : **83440058.2**

(22) Date de dépôt : **28.11.83**

(54) **Dispositif de descente automatique rapide pour pantographe.**

(30) Priorité : **30.11.82 FR 8220172**

(43) Date de publication de la demande :
**27.06.84 Bulletin 84/26**

(45) Mention de la délivrance du brevet :
**04.03.87 Bulletin 87/10**

(84) Etats contractants désignés :
**AT BE CH DE GB IT LI LU NL SE**

(56) Documents cités :
**EP-A- 0 042 334**
**CH-A-   111 266**
**CH-A-   120 422**
**DE-B- 1 106 363**
**DE-C-   835 463**

(73) Titulaire : **Stemmann-Technik GmbH**
**Postfach 1460**
**D-4443 Schüttorf (DE)**

(72) Inventeur : **Stemmann, Karl**
**Quendorfer Strasse 34**
**D-4443 Schüttorf (DE)**

(74) Mandataire : **Chameroy, Claude et al**
**c/o Cabinet Malemont 42, avenue du Président Wilson**
**F-75116 Paris (FR)**

Jouve, 18, rue St-Denis, 75001 Paris, France

## Description

La présente invention concerne un dispositif pour provoquer automatiquement la descente rapide d'un pantographe constitué par un ensemble de cadres articulés fixé sur le toit d'un véhicule à traction électrique et supportant par l'intermédiaire d'une suspension élastique un archet destiné à venir en contact par frottement sur la caténaire, avec au moins un ressort de montée assurant le déploiement du pantographe et un organe de commande pour assurer son repliement à plat sur le toit du véhicule lorsque le pantographe se trouve soumis à une contrainte anormale, en provoquant la détente du ressort de montée.

On connaît déjà divers dispositifs de ce genre permettant notamment, en cas de surcharge sur le pantographe, d'assurer sa descente rapide en vue d'éviter qu'il ne soit endommagé ou qu'il n'endommage lui-même la caténaire et ses éléments de suspension.

Dans l'un de ces dispositifs connus par exemple, lors d'une surcharge mécanique sur les cadres articulés du pantographe, on provoque une détente du ressort de montée et par conséquent la descente du pantographe sous l'action de son propre poids, grâce au dépassement d'un certain seuil d'effort d'un limiteur d'effort (EP-A1-42334) ou grâce au cisaillement d'un boulon de rupture spécialement prévu à cet effet.

Tous ces dispositifs présentent cependant un certain nombre d'inconvénients parmi lesquels on peut citer en particulier le fait qu'ils peuvent se déclencher inopinément, par exemple lors de réparations effectuées sur le pantographe, et provoquer ainsi des incidents corporels.

La présente invention a donc pour but principal de remédier à cet inconvénient et, pour ce faire, elle a pour objet un dispositif de descente rapide qui se caractérise essentiellement en ce qu'il comprend un système de contacts électriques alimenté à partir de la caténaire et formant au moins un interrupteur qui se ferme sous l'effet d'une contrainte anormale, pour alimenter un dispositif de déclenchement du ressort de montée.

Ainsi, la descente rapide du pantographe ne peut se produire que lorsque la caténaire est sous tension, ce qui évite tout risque de déclenchement inopiné, notamment dans le cas de réparations effectuées sur le pantographe.

De préférence, le système de contacts comprend au moins un premier contact isolé solidaire de l'archet et au moins un deuxième contact isolé solidaire de l'ensemble de cadres articulés, l'un de ces contacts étant relié électriquement à la caténaire, tandis que l'autre est relié à un dispositif de déclenchement électrique apte à libérer l'une des extrémités du ressort de montée, ce premier et ce deuxième contacts étant disposés de manière à coopérer ensemble lorsque l'archet est soumis à une surcharge frontale, afin de provoquer l'alimentation du dispositif de déclenchement.

Grâce à cette disposition, la descente rapide du pantographe se trouve déclenchée par un déplacement déterminé de l'archet par rapport à l'ensemble de cadres articulés, à l'encontre de l'action exercée par la suspension élastique, ce qui permet d'obtenir une beaucoup plus grande sensibilité dans le déclenchement. De plus, la force de déclenchement nécessaire peut être réglée facilement en modifiant la position relative des contacts.

De préférence également, on prévoit un groupe de premiers contacts et un groupe de deuxièmes contacts, disposés de manière à coopérer dans l'un ou l'autre des deux sens de marche du véhicule.

Par ailleurs, le système de contacts comprend en outre avantageusement un troisième contact isolé et électriquement relié au dispositif de déclenchement électrique et qui est disposé au voisinage de chacune des extrémités latérales de l'archet, de manière à être heurté directement par la caténaire lors d'un débordement latéral de celle-ci.

Ainsi, le pantographe se trouve protégé, non seulement en cas de surcharge frontale ; mais également en cas de choc latéral ou de simple débordement de la caténaire. En effet, la caténaire vient alors heurter le troisième contact, ce qui provoque l'alimentation du dispositif de déclenchement électrique et par conséquent la descente rapide du pantographe.

Dans une forme de réalisation particulière de l'invention, le dispositif de déclenchement électrique est conçu pour coopérer avec une fourchette mobile dans laquelle vient s'engager ladite extrémité du ressort de montée.

Ce dispositif de déclenchement électrique pourra par exemple être constitué par un électro-aimant apte à provoquer l'effacement d'un goujon de blocage de la fourchette dans sa position de retenue du ressort de montée.

De préférence, ladite extrémité du ressort de montée est prolongée par une tige pourvue d'une butée limitant la détente du ressort lors de sa libération par le dispositif de déclenchement électrique, ce qui permet de réduire l'effet du choc du pantographe sur le toit du véhicule lors de son mouvement de descente rapide.

De plus, la butée est apte à recevoir un élément de prise permettant de retendre le ressort de montée.

En effet, grâce à la butée, le ressort ne tombe pas sur le toit du véhicule et reste guidé dans sa suspension, ce qui permet ensuite de le retendre très facilement au moyen par exemple d'un élément fileté venant en prise dans ladite butée, et ce quelle que soit la position en hauteur du pantographe.

Par ailleurs, lorsque le pantographe est équipé de deux ressorts de montée, comme c'est souvent le cas, un seul de ces ressorts est associé à un dispositif de déclenchement électrique, afin de réduire encore l'effet du choc du pantographe sur le toit du véhicule porteur.

Une forme d'exécution de l'invention est décrite ci-après à titre d'exemple, en référence aux dessins annexés dans lesquels :

la figure 1 est une vue simplifiée en perspective d'un pantographe du type unijambiste, équipé d'un dispositif de descente rapide conforme à l'invention ;

les figures 2 à 4 sont des vues du détail à plus grande échelle de la tête du pantographe ;

la figure 5 est une vue analogue à la figure 4, montrant le déplacement de l'archet en cas de surcharge frontale ;

les figures 6 et 7 sont des vues de détail des moyens utilisés pour assurer la libération du ressort de montée ; et

les figures 8 et 9 sont des vues analogues aux figures 6 et 7, montrant les moyens utilisés pour retendre le ressort après sa libération.

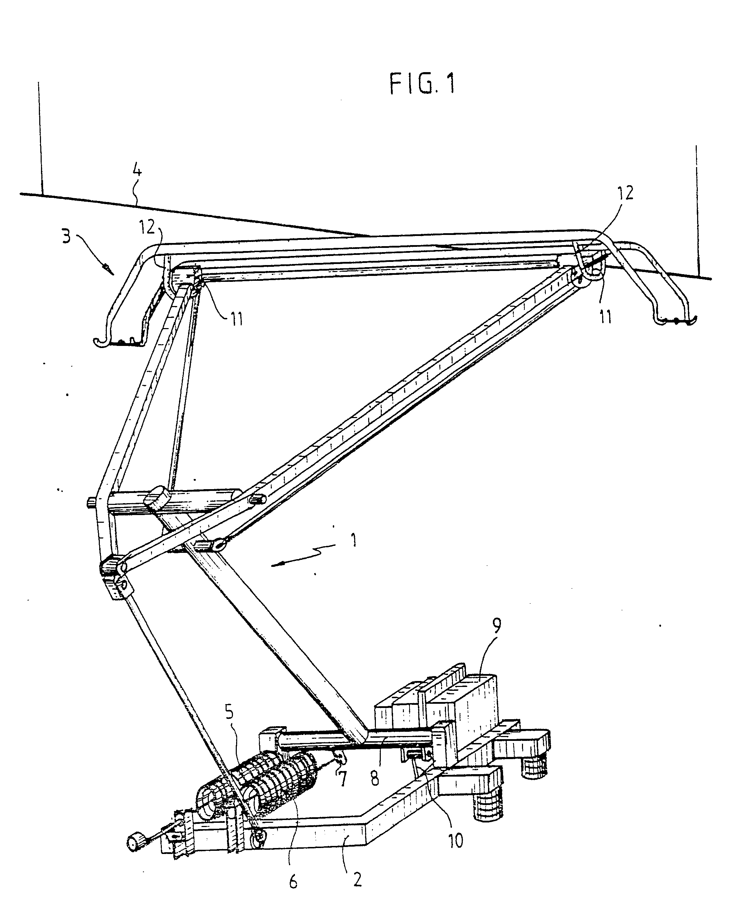

En se référant tout d'abord à la figure 1, on peut voir un pantographe du type unijambiste, constitué essentiellement par un ensemble 1 de cadres articulés venant se fixer sur le toit d'un véhicule à traction électrique, non représenté, par l'intermédiaire d'un châssis 2. Cet ensemble 1 supporte à sa partie supérieure un double archet 3 destiné à venir en contact par frottement avec la caténaire 4.

Le pantographe est équipé de façon classique de deux ressorts de montée 5 et 6 assurant son déploiement. Ces ressorts sont fixés à une extrémité sur le chassis 2 et à l'autre extrémité sur une patte 7 solidaire de l'arbre principal 8 de l'ensemble de cadres articulés 1. Un organe de commande 9, constitué par exemple par un moteur électrique, est par ailleurs prévu pour assurer le repliement à plat du pantographe sur le toit du véhicule porteur, cet organe de commande agissant également sur l'arbre principal 8 par l'intermédiaire d'une biellette 10.

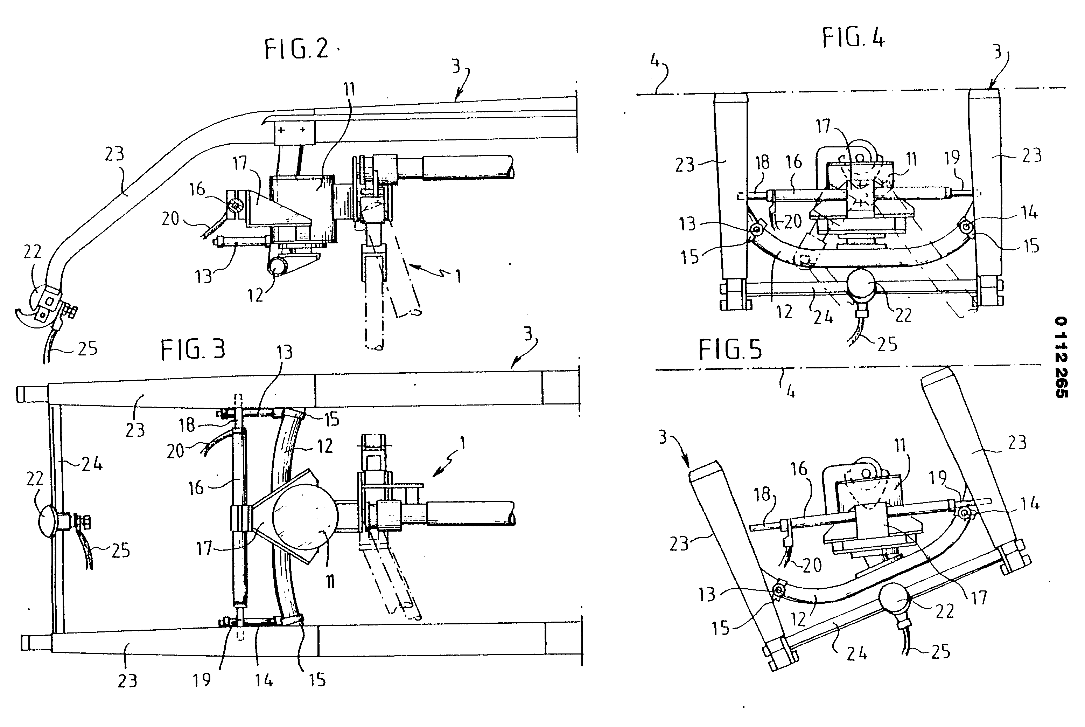

Ainsi qu'on peut le voir plus clairement sur les figures 2 à 5, l'archet 3 est fixé sur l'ensemble 1 par l'intermédiaire d'une suspension élastique qui est constituée ici essentiellement de deux pots à ressort tels que 11, dans lesquels l'archet est supporté par des brides telles que 12.

Conformément à l'invention, le pantographe est par ailleurs équipé d'un dispositif dit de descente rapide pour déclencher automatiquement la chute du pantographe lorsque l'archet se trouve soumis à une contrainte anormale. Ce dispositif se compose essentiellement d'un système de contacts électriques logé dans la tête du pantographe et formant au moins un interrupteur qui, lorsqu'il se ferme, provoque la détente de l'un des ressorts de montée, en l'occurrence le ressort 5, grâce à des moyens qui seront décrits plus en détail par la suite.

Dans l'exemple de réalisation particulier décrit ici, le système de contacts selon l'invention comprend tout d'abord deux premiers contacts 13, 14, solidaires de l'archet 3. Ces contacts sont constitués par des tronçons de tube métallique qui sont fixés à une certaine distance l'un de l'autre et de manière réglable sur la bride 12 supportant l'archet, au moyen de colliers appropriés 15.

Une tige 16 est par ailleurs fixée de manière isolée sur le pot à ressort 11 par l'intermédiaire d'une potence 17. Cette tige est dénudée à ses extrémités et constitue ainsi des deuxièmes contacts 18, 19 qui sont conçus pour coopérer avec les premiers contacts 13, 14 en formant deux interrupteurs normalement ouverts, respectivement 13-18 et 14-19. Pour des raisons de symétrie, le pantographe pourra éventuellement être équipé de l'autre côté d'un système de contacts analogue, disposé entre le second pot à ressort 11 et la bride 12 correspondante.

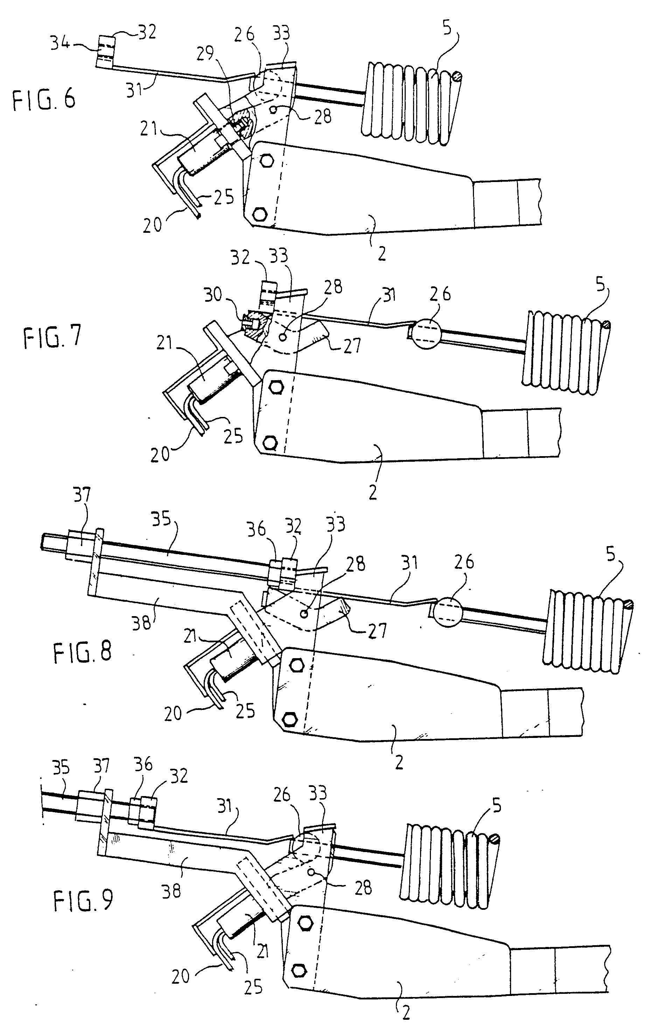

Les premiers contacts 13, 14 sont reliés électriquement aux parties de l'archet destinées à venir frotter sur la caténaire 4, soit par des câbles, soit directement par l'intermédiaire de la bride 12. Quant aux deuxièmes contacts 18, 19, ils sont reliés électriquement par un câble 20 à un dispositif de déclenchement électrique 21, visible sur les figures 6 à 9 et qui est apte à provoquer la libération du ressort de montée 5.

Le système de contacts selon l'invention est complété par un troisième contact tel que 22, situé au voisinage de l'extrémité des cornes 23 de l'archet 3. Ce contact est constitué ici par un plot qui est fixé de manière isolée sur une barre 24 reliant transversalement les deux éléments de l'archet, au niveau de l'extrémité des cornes 23. Un tel contact est prévu de part et d'autre de l'archet et ils sont reliés tous les deux au dispositif de déclenchement électrique 21 par un câble 25.

En se référant maintenant aux figures 6 à 9, on peut voir que l'extrémité du ressort de montée 5 qui n'est pas reliée à une patte 7, est constituée par une sphère 26 conçue pour venir en prise dans une fourchette 27 montée mobile autour d'un axe 28 supporté par le châssis 2. La fourchette 27 est normalement bloquée en position de retenue du ressort 5 par le dispositif de déclenchement 21 qui est constitué ici par un électro-aimant apte à provoquer l'effacement d'un goujon 29 venant en prise dans une douille 30 solidaire de la fourchette. Pour éviter des problèmes de corrosion, le goujon 29 et la douille 30 seront avantageusement réalisés en acier inoxydable.

L'extrémité 26 du ressort 5 est par ailleurs prolongée par une tige 31 pourvue à son extrémité d'une butée 32 conçue pour coopérer avec un épaulement 33 ménagé à cet effet sur le châssis 2. La butée 32 est en outre munie d'un filetage 34, dont le but apparaîtra plus clairement par la suite.

Le dispositif de descente rapide pour pantographe qui vient d'être décrit fonctionne de la manière suivante :

En cas de surcharge frontale sur le pantographe, par suite d'un incident quelconque, par exemple un obstacle, l'archet 3 pivote dans sa suspension élastique par rapport à l'ensemble de cadres articulés 1 et prend alors la position représentée sur la figure 5. Ce faisant, le contact 14 solidaire de l'archet vient heurter le contact 19 solidaire du pot à ressort 11, fermant ainsi l'interrupteur 14-19. Par suite, l'électro-aimant 21 se trouve alimenté par le courant de la catenaire 4, ce qui provoque l'effacement du goujon 29 retenant la fourchette 27 par sa douille 30. La fourchette 27 pivote alors autour de son axe 28 et libère ainsi l'extrémité 26 du ressort de montée 5 qui se détend jusqu'à ce que la butée 32 prévue à l'extrémité de la tige 31 vienne en contact avec l'épaulement 33 du châssis 2 dans la position illustrée par la figure 7. On notera que ce faisant, le ressort reste guidé par la tige 31 et ne risque donc pas de tomber sur le toit du véhicule porteur.

Sous l'effet de la détente du ressort 5, le pantographe descend immédiatement de par son poids propre, mais sa chute sur le toit du véhicule porteur est néanmoins amortie, d'une part parce que seulement une partie de la course du ressort est libérée du fait de la présence de la butée 32, et d'autre part parce que l'action du second ressort de montée 6 subsiste entièrement. Le choc peut être ainsi réduit au minimum, afin de ne pas risquer d'endommager le pantographe ou le toit du véhicule.

Bien entendu, le dispositif selon l'invention fonctionne aussi bien dans les deux sens de marche du véhicule. En se référant à la figure 5, on voit par exemple que si le pantographe subit un choc frontal alors que le véhicule se déplace dans l'autre sens, c'est l'interrupteur formé par les contacts 13 et 18 qui interviendra pour provoquer l'alimentation de l'électro-aimant 21 et par conséquent la descente rapide du pantographe dans les mêmes conditions que précédemment. De plus, il est facile d'ajuster la force de déclenchement du dispositif dans l'un et l'autre sens, en réglant simplement la position des contacts 13 et 14 le long de la.bride 12, au moyen des colliers 15 prévus à cet effet.

En cas de choc latéral sur le pantographe, entraînant un débordement de la catenaire, cette dernière viendra en contact avec l'un des plots 22 disposés aux extrémités des cornes 23 de l'archet, provoquant ainsi l'alimentation de l'électro-aimant 21 et par conséquent la descente du pantographe, toujours dans les mêmes conditions que précédemment. Le pantographe équipé conformément à l'invention se trouve donc protégé à la fois contre des chocs frontaux et des chocs latéraux, et également dans le cas d'un simple débordement latéral de la caténaire.

Par ailleurs, comme l'électro-aimant 21 ne peut être alimenté qu'à partir de la caténaire, le dispositif de descente rapide ne peut se déclencher que lorsque celle-ci est sous tension, ce qui évite tout risque de déclenchement inopiné, notamment lorsque des réparations sont effectuées sur le pantographe. Il va de soi en outre que l'électro-aimant 21 pourrait sans inconvénient être remplacé par un autre dispositif assurant la même fonction, par exemple un dispositif pyrotechnique, à condition d'être à déclenchement électrique.

Lorsque le dispositif de descente rapide selon l'invention a été déclenché, le pantographe peut être facilement remis en service en procédant de la manière illustrée par les figures 8 et 9.

Pour ce faire, on commence par introduire dans le filetage 34 de la butée 32 une extrémité d'une tige filetée 35 qui est ensuite fixée solidement en place au moyen d'un écrou 36, puis on visse sur l'autre extrémité de la tige un écrou 37 prenant appui sur un support 38 spécialement prévu à cet effet et venant se monter sur le châssis 2. On voit immédiatement qu'en serrant progressivement l'écrou 37, il est possible de retendre le ressort de montée 5 jusqu'à ce que son extrémité 26 vienne à nouveau en prise dans la fourchette 27 qui peut alors être remise en place. Il suffit alors de réarmer l'électro-aimant 21 ou de changer l'élément s'il s'agit d'un dispositif pyrotechnique, puis de procéder au démontage de la tige 35 et du support 38, pour que le dispositif de descente rapide selon l'invention soit à nouveau prêt à fonctionner. On notera en particulier que grâce à cette disposition, il est possible de retendre le ressort de montée dans n'importe quelle position du pantographe, ce qui n'était pas le cas jusqu'à maintenant avec les dispositifs connus qui nécessitaient le plus souvent un démontage complet du pantographe.

Bien entendu, la présente invention n'est pas limitée au mode de réalisation qui a été représenté et décrit, et on peut lui apporter de nombreuses modifications sans, pour autant, sorti du cadre des revendications. Il va de soi notamment que cette invention n'est pas limitée aux pantographes unijambistes, ni à un type particulier de suspension de l'archet.

## Revendications

1. Dispositif pour provoquer automatiquement la descente rapide d'un pantographe constitué par un ensemble (1) de cadres articulés fixé sur le toit d'un véhicule à traction électrique et supportant par l'intermédiaire d'une suspension élastique (11) un archet (3) destiné à venir en contact par frottement sur la caténaire (4), avec au moins un ressort de montée (5, 6) assurant le déploiement du pantographe et un organe de commande (9) pour assurer son repliement à plat sur le toit du véhicule lorsque le pantographe se trouve soumis à une contrainte anormale, en provoquant la détente du ressort de montée (5), ledit dispositif de descente rapide étant caractérisé en ce qu'il comprend un système de contacts électriques (13, 14, 18, 19, 22) alimenté à partir de la caténaire (4) et formant au moins un interrupteur qui se ferme sous l'effet de la contrainte anormale, pour alimenter un dispositif de déclenchement du ressort de montée.

2. Dispositif de descente rapide selon la revendication 1, caractérisé en ce que le système de contacts comprend au moins un premier contact isolé (13, 14) solidaire de l'archet (3) et au moins un deuxième contact isolé (18, 19) solidaire de l'ensemble de cadres articulés (1), l'un de ces contacts (13, 14) étant relié électriquement à la caténaire (4), tandis que l'autre (18, 19) est relié à un dispositif de déclenchement électrique (21) apte à libérer l'une des extrémités du ressort de montée (5), ce premier et ce deuxième contacts étant disposés de manière à coopérer ensemble lorsque l'archet (3) est soumis à une surcharge frontale, afin de provoquer l'alimentation du dispositif de déclenchement (21).

3. Dispositif de descente rapide selon la revendication 2, caractérisé en ce qu'il est prévu un groupe de premiers contacts (13, 14) et un groupe de deuxièmes contacts (18, 19), disposés de manière à coopérer dans l'un ou l'autre des deux sens de marche du véhicule.

4. Dispositif de descente rapide selon la revendication 2 ou 3, caractérisé en ce que le système de contacts comprend en outre un troisième contact isolé (22) et électriquement relié au dispositif de déclenchement électrique (21) et qui est disposé au voisinage de chacune des extrémités latérales de l'archet (3), de manière à être heurté directement par la caténaire (4) lors d'un débordement latéral de celle-ci.

5. Dispositif de descente rapide selon l'une quelconque des revendications 2 à 4, caractérisé en ce que le dispositif de déclenchement électrique (21) est conçu pour coopérer avec une fourchette mobile (27) dans laquelle vient s'engager ladite extrémité (26) du ressort de montée (5).

6. Dispositif de descente rapide selon la revendication 5, caractérisé en ce que le dispositif de déclenchement électrique est constitué par un électro-aimant (21) apte à provoquer l'effacement d'un goujon (29) de blocage de la fourchette (27) dans sa position de retenue du ressort de montée (5).

7. Dispositif de descente rapide selon l'une quelconque des revendications 2 à 6, caractérisé en ce que ladite extrémité (26) du ressort de montée (5) est prolongée par une tige (31) pourvue d'une butée (32) limitant la détente du ressort (5) lors de sa libération par le dispositif de déclenchement électrique (21).

8. Dispositif de descente rapide selon la revendication 7, caractérisé en ce que la butée (32) est apte à recevoir un élément de prise (35) permettant de retendre le ressort de montée (5).

9. Dispositif de descente rapide selon l'une quelconque des revendications 2 à 8, appliqué au cas particulier d'un pantographe équipé de deux ressorts de montée (5, 6), caractérisé en ce qu'un seul de ces ressorts est associé à un dispositif de déclenchement électrique (21).

## Claims

1. A device for automatically effecting the rapid lowering of a pantograph comprising a set (1) of articulated links mounted on the roof of an electric traction vehicle, supporting through a resilient suspension (11) a bow (3) adapted to maintain frictional contact with the overhead cable (4), and having at least one lifting spring (5, 6) adapted to opening the pantograph out and a controller (9) adapted to folding the pantograph flat on the roof of the vehicle when it is subjected to an abnormal constraint, by releasing the lifting spring (5), which rapid lowering device is characterized in that it consists of a system of electrical contacts (13, 14, 18, 19, 22) energized from the overhead cable (4) and forming at least one circuit breaker which closes under the action of the abnormal constraint, thereby energizing a device for disengaging the lifting spring.

2. A rapid lowering device as in Claim 1, characterized in that the system of contacts includes at least one first insulated contact (13, 14) fixed to the bow (3) and at least one second insulated contact (18, 19) fixed to the set (1) of articulated links, one of these contacts (13, 14) being connected electrically to the overhead cable (4), while the other (18, 19) is connected to an electrical releaser (21) adapted to liberating one end of the lifting spring (5), the first and second contacts being so disposed that they cooperate together when the bow (3) is subjected to a frontal overload, thereby effecting the energization of the releaser (21).

3. A rapid lowering device as in Claim 2, characterized in the provision of a group of first contacts (13, 14) and a group of second contacts (18, 19), so disposed that they cooperate in one or the other direction of vehicle motion.

4. A rapid lowering device as in Claim 2 or 3, characterized in that the system of contacts also includes a third insulated contact (22), connected electrically to the electrical releaser (21) and disposed adjacently to each of the lateral extremities of the bow (3), so as to collide directly with the overhead cable (4) should it slide off the end.

5. A rapid lowering device as in any of Claims 2 to 4, characterized in that the electrical releaser (21) is designed to cooperate with a mobile fork (27) in which is engaged the releasable end (26) of the lifting spring (5).

6. A rapid lowering device as in Claim 5, characterized in that the electrical releaser consists of an electromagnet (21) adapted to retracting a pin (29) which locks the fork (27) in the position in which it retains the lifting spring (5).

7. A rapid lowering device as in any of Claims 2 to 6, characterized in that the releasable end (26) of the lifting spring (5) is extended into a stem (31) having a stop (32) which limited the recoil of the spring (5) when it is liberated by the electrical releaser (21).

8. A rapid lowering device as in Claim 7, characterized in that the stop (32) is adapted to receiving a setting member (35) whereby the lifting spring (5) can be reset.

9. A rapid lowering device as in any of Claims 2 to 8, in the particular embodiment relating to a pantograph having two lifting springs (5, 6), characterized in that only one of these springs is associated with an electrical releaser (21).

**Patentansprüche**

1. Selbsttätige Schnellsenkvorrichtung für Scherenstromabnehmer bestehend aus einer Anordnung von miteinander gelenkig verbundenen und auf dem Dach eines Fahrzeuges für elektrischen Zugantrieb befestigten Rahmen, die über eine federnde Aufhängung (11) einen Bügel (3) zwecks Inkontaktbringens durch Reibung mit der Fahrleitung (4) tragen, mit mindestens einer Aufrichtfeder (5, 6) zur Spreizung des Scherenstromabnehmers, sowie mit einem Steuerorgan (9) zwecks Zurückklappens in die Flachlage auf dem Dach des Fahrzeuges, wenn der Stromabnehmer einer abnormalen Beanspruchung unter Entspannen der Aufrichtfeder (5) unterworfen wird, dadurch gekennzeichnet, daß die Schnellsenkvorrichtung eine Anordnung von aus der Fahrleitung (4) gespeisten elektrischen Kontakten (13, 14, 18, 19, 22) unter Bildung mindestens einen Schalter umfaßt, der sich unter der Wirkung der abnormalen Beanspruchung schließt und eine Auslösevorrichtung für die Aufrichtfeder ansteuert.

2. Schnellsenkvorrichtung nach Anspruch 1, dadurch gekennzeichnet, daß die Anordnung von Kontakten mindestens einen ersten, mit dem Bügel (3) fest verbundenen isolierten Kontakt (13, 14) und mindestens einen zweiten isolierten, mit der Anordnung der gelenkig miteinander verbundenen Rahmen fest verbundenen Kontakt umfaßt, wobei der eine dieser Kontakte (13, 14) elektrisch mit der Überleitung (4) verbunden ist, während der andere (18, 19) an eine elektrische Auslösevorrichtung (21) angeschlossen ist, welche die einen Enden der Aufrichtfeder (5) freigeben kann, wobei der erste und zweite Kontakt so angeordnet sind, daß sie miteinander zusammenwirken, wenn der Bügel (3) einer frontalen Überlastung unterworfen ist.

3. Schnellsenkvorrichtung nach Anspruch 2, dadurch gekennzeichnet, daß eine Gruppe von ersten Kontakten (13, 14) und eine Gruppe von zweiten Kontakten (18, 19) vorgesehen ist, die so angeordnet sind, daß sie in der einen oder in der anderen der beiden Fahrtrichtungen des Fahrzeuges zusammenwirken.

4. Schnellsenkvorrichtung nach Anspruch 2 oder 3, dadurch gekennzeichnet, daß die Anordnung von Kontakten außerdem einen dritten isolierten und elektrisch mit der elektrischen Auslösevorrichtung (21) verbundenen Kontakt (22) enthält, der in der Nähe eines jeden der seitlichen Enden des Bügels (3) angeordnet ist, so daß er direkt durch die Überleitung (4) bei einem seitlichen Überschreiten derselben betätigt wird.

5. Schnellsenkvorrichtung nach einem oder mehreren der Ansprüche 2 bis 4, dadurch gekennzeichnet, daß die elektrische Auslösevorrichtung (21) mit einer beweglichen Gabel (27) zusammenwirkt, in die das Ende (26) der Aufrichtfeder (5) eingreift.

6. Schnellsenkvorrichtung nach Anspruch 5, dadurch gekennzeichnet, daß die elektrische Auslösevorrichtung durch einen Elektromagnet (21) gebildet ist, der das Auslösen eines Sperrstiftes (29) der Gabel (27) in seiner Stellung zum Rückhalten der Aufrichtfeder (5) bewirken kann.

7. Schnellsenkvorrichtung nach einem der Ansprüche 2 bis 6, dadurch gekennzeichnet, daß das Ende (26) der Aufrichtfeder (5) durch einen Schaft (31) verlängert ist, der mit einem Anschlag (32) zur Begrenzung der Entspannung der Feder (5) bei ihrer Freigabe durch die elektrische Auslösevorrichtung (21) versehen ist.

8. Schnellsenkvorrichtung nach Anspruch 7, dadurch gekennzeichnet, daß der Anschlag (32) ein Auffangelement (35) aufnehmen kann, das ein Wiederspannen der Aufrichtfeder (5) ermöglicht.

9. Schnellsenkvorrichtung nach einem der Ansprüche 2 bis 8, in Anwendung auf den besonderen Fall eines Stromabnehmers mit zwei Aufrichtfedern (5, 6) dadurch gekennzeichnet, daß nur einer dieser Federn (5, 6) einer elektrischen Auslösevorrichtung (21) zugeordnet ist.

FIG.1

FIG.2

FIG.3

FIG.4

FIG.5

0 112 265

FIG. 6

FIG. 7

FIG. 8

FIG. 9

3